Europäisches Patentamt

European Patent Office ·

Office européen des brevets

(11) Veröffentlichungsnummer: **0 374 589**

**A1**

## EUROPÄISCHE PATENTANMELDUNG

(21) Anmeldenummer: **89122499.0**

(22) Anmeldetag: **06.12.89**

(51) Int. Cl.⁵· **A01D 34/74**

(30) Priorität: **17.12.88 DE 8815675 U**

(43) Veröffentlichungstag der Anmeldung:
**27.06.90 Patentblatt 90/26**

(84) Benannte Vertragsstaaten:
**AT BE CH DE ES FR GB IT LI NL SE**

(71) Anmelder: **Alois Pöttinger Maschinenfabrik GmbH**

**A-4710 Grieskirchen(AT)**

(72) Erfinder: **Leposa, Wolfgang**
**Sonnfeldstrasse 17**
**A-4710 Grieskirchen(AT)**
Erfinder: **Lehner, Josef, Dipl.-Ing.**

**A-4732 St.Thomas Nr. 12(AT)**
Erfinder: **Greifeneder, Heinrich**
**Kalvarienbergsiedlung 180**
**A-4710 Grieskirchen(AT)**

(74) Vertreter: **Dupal, Helmut, Dipl.-Ing.**
**Jägerweg 12**
**A-4702 Wallern(AT)**

(54) Rotationsmähwerk.

(57) Rotationsmähwerk mit einem unter dem Mähteller (5) angeordneten äußeren Stützteller (7) in dem ein innerer Stützteller (9) angeordnet ist, dessen zylindrischer Außenrand (30) an der Wand einer zylindrischen Einziehung (29) des äußeren Stütztellers (7) in Axialrichtung (21) des Mähtellers (5) höhenverstellbar und gegen diese Wand mit einer elastischen Ringdichtung (11) abdichtend, geführt ist.

Fig. 1

# Rotationsmähwerk

Die Erfindung bezieht sich auf ein Rotationsmähwerk mit den gattungsbildenden Merkmalen des Anspruches 1.

Bei Maschinen dieser Gattung ist die Höhenverstellung des Mähtellers zur Veränderung der Schnitthöhe des Mähwerkes sehr aufwendig, wenn die Verstellung in einfacher Weise und störungsfrei möglich sein soll.

Bei einer früheren Ausführungsform dieser Mähwerke wurde der Stützteller geteilt und ein innerer Teil für die Höhenverstellung axial verschiebbar angeordnet, wodurch eine günstige Aufteilung der bei der Arbeit auftretenden Stützkräfte möglich war, während der Spalt zwischen Mähteller und Stützteller konstant gehalten werden konnte (DE-PS 35 31 420).

Nachteilig war der sehr aufwendige Aufbau der Höhenverstellung, sowie die freie Drehbarkeit des äußeren und des inneren Stütztellers gegeneinander. Überdies war zwischen innerem und äußerem Stützteller ein verhältnismäßig großer Spalt vorhanden, durch den Erde und Pflanzenreste ins Innere des Mähwerkes gelangen konnten und daraus sehr schwer zu entfernen waren.

Zweck der Erfindung ist es ein Rotationsmähwerk so zu verbessern, daß dieser beschriebene Nachteil nicht mehr auftritt und eine einfach aufgebaute Stütztelleranordnung erhalten bleibt.

Dies wird bei einem Rotationsmähwerk der eingangs beschriebenen Gattung mit den Merkmalen des kennzeichnenden Teiles des Anspruches 1 erreicht.

Die dadurch geschaffene Höhenverstellvorrichtung ergibt eine exakte Führung des zylindrischen Außenrandes des inneren Stütztellers in Axialrichtung, in der zylindrischen koaxialen Einziehung des äußeren Stütztellers, die das Eindringen von Fremdkörpern oder Schmutz zumindest weitgehend vermeidet und so Störungen und Beschädigungen des Mähwerkes verhindert.

Die Unteransprüche 2 bis 15, die gleichzeitig Bestandteil der Beschreibung sind, betreffen besonders vorteilhafte Ausgestaltungen der Erfindung.

Gerade bei dem großen abzudichtenden Umfang sind günstige Einzellösungen von besonders großer Bedeutung.

Eine besonders einfache Lösung ergibt sich durch Anwendung einer elastischen Ringdichtung zwischen den zylindrischen Teilen der beiden Stützteller, wobei die Anordnung am oberen Ende des Außenrandes des inneren Stütztellers eine besonders einfache Lösung ergibt und es ermöglicht, daß nur ein enger Spalt abzudichten ist.

Durch Anordnung der Ringdichtung in einem Gehäuse wird diese von Anpreßkräften teilweise entlastet und in dichtender Lage gehalten und der Ein-und Ausbau derselben ist wesentlich vereinfacht, wobei der geteilte Aufbau des Gehäuses eine weitere Vereinfachung ergibt.

Die Befestigung der Ringdichtung ist sehr erleichtert, wenn das Gehäuse oder dessen Teile eine Fahne aufweisen, mit der die Befestigung erfolgen kann.

Eine ebenfalls sehr günstige Möglichkeit für die Halterung der Ringdichtung in dichtender Lage und für den Ein-und Ausbau ist die Anwendung von wenigstens einem Federring, wobei besonders im Bereich oberhalb der Begrenzung des zylindrischen Außenrandes des inneren Stütztellers die Wirksamkeit für die Dichtung und im Bereich unterhalb davon für die Befestigung überwiegt.

Für den Einbau mit Federringen ist es sehr vereinfachend, wenn die Ringdichtung eine Fahne aufweist, mit der sie an dem zylindrischen Außenrand innen anliegt und wenn diese mit Vorsprüngen versehen ist, die in Öffnungen des Außenrandes eingreifen.

Eine andere sehr wirksame Art der Abdichtung besteht in der Anwendung einer plattenförmigen Ringdichtung an der Unterseite der Stützteller, die in ringförmigen Einsickungen am Umfang der Stützteller eingelegt ist, wobei die Anwendung eines Niederhaltering den Dichtungssitz wesentlich verbessert.

Eine andere sehr wirksame Lösung besteht in der Teilung des Stütztellers, so daß ein zur Achse desselben senkrechter Rand entsteht, der mit einer Platte am Umfang verschraubt wird, zwischen denen die Ringdichtung eingelegt und dadurch geklemmt ist.

Die Erfindung ist nachstehend an Hand einiger bevorzugter Ausführungsbeispiele beschrieben.

Es zeigt

Fig. 1 ein Rotationsmähwerk mit Mähtrommeln in Seitenansicht, teilweise geschnitten,

Fig. 2 bis 4 mehrere Arten der Abdichtung zwischen den Stütztellern, als Ausschnitt aus Fig.1 und

Fig. 5 einen Ausschnitt nach Fig.1 mit einer plattenförmigen Dichtung an der Unterseite der Stützteller.

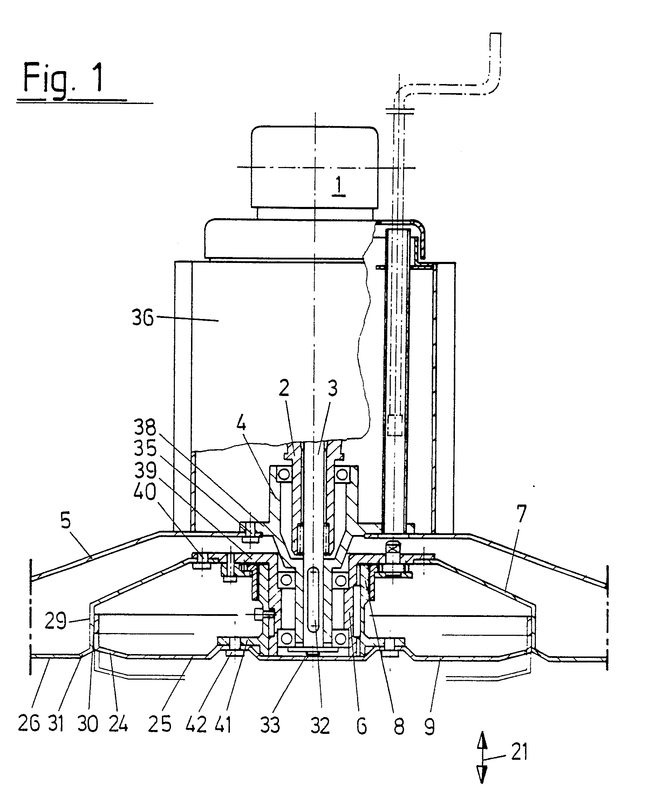

Das in Fig.1 dargestellte Rotationsmähwerk besteht aus einem Mähwerksrahmen 1 an dem ein Führungsrohr 2 angeschraubt ist, in dem eine Antriebswelle 3 gelagert ist, auf der eine Mähtellernabe 4 mit einem Keil 32 aufgekeilt und mit einer Verschraubung 33 gesichert ist.

Die Mähtellernabe 4 ist an ihrem oberen Ende an dem Führungsrohr 2 gelagert und mit einem Flansch 38 versehen, an dem sie mit der Verschraubung 35 mit einem Mähteller 5 verschraubt ist, der an seinem Außenrand - nicht dargestellt - Mähklingen trägt und nach oben zu mit einer Trommel 36 versehen ist.

An der Mähtellernabe 4 ist in der Unterhälfte eine äußere Stütztellernabe 6 gelagert, die an ihrem oberen Ende einen Flansch 39 trägt, an dem mit der Verschraubung 40 ein äußerer Stützteller 7 befestigt ist, der mit dem Außenrand des Mähtellers 5 einen Spalt bildet , durch den die Mähklingen herausragen.

Auf der äußeren Stütztellernabe 6 ist eine innere Stütztellernabe 8 axial verschiebbar und gegen Verdrehung ge sichert angebracht, die am unteren Ende einen Flansch 41 trägt, an dem mit der Verschraubung 42 der innere Stützteller 9 befestigt ist.

Der innere Stützteller 9, dessen Stellung für die große Schnitthöhe angedeutet ist, ist mit einem zylindrischen, koaxial angeordneten Außenrand 30 versehen, der in einer zylindrischen, koaxialen Einziehung 29 des äußeren Stütztellers 7 dichtend geführt ist.

Die Höhe des Außenrandes 30 des inneren Stütztellers 9 entspricht in axialer Richtung 21 etwa der Höhe der Einziehung 29 des äußeren Stütztellers 7.

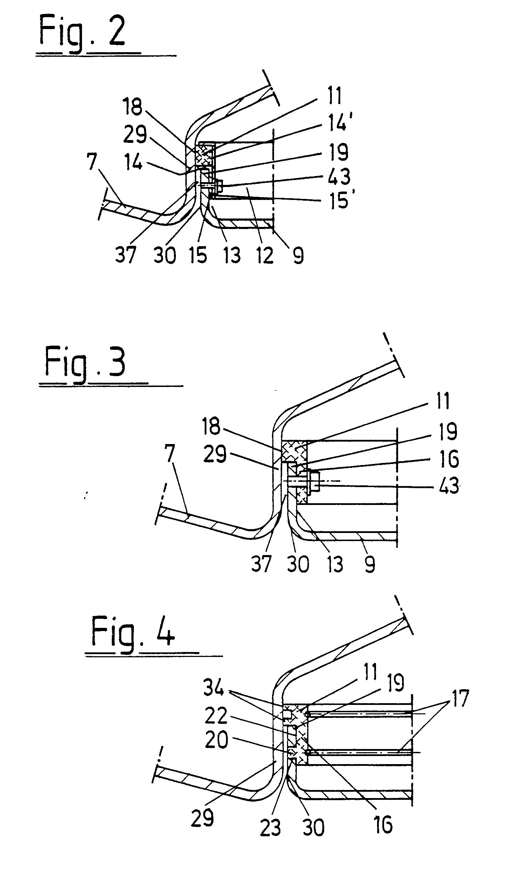

In Fig.2 ist eine elastische Ringdichtung 11 dargestellt, die einen rechteckigen Querschnitt aufweist und oberhalb der oberen Begrenzung 19 des zylindrischen Außenrandes 30 des inneren Stütztellers 9 angeordnet den Spalt 37 zwischen Außenrand 30 und zylindrischer Einziehung 29 des äußeren Stütztellers 7 mit ihrer Dichtfläche 18 abschließt.

Die Ringdichtung 11 ist in ein Gehäuse 12 eingelegt, das aus zwei ringförmigen Teilen 14.14′ besteht, von denen der eine Teil 14 die Ringdichtung 11 an der Unterseite und der zweite Teil 14′ an der Oberseite umgreift, so daß im wesentlichen die dichtende Außenseite aus dem Gehäuse 12 hervorragt.

Die beiden Teile 14,14′ des Gehäuses 12 sind mit Fahnen 15,15′ versehen, mit denen sie an der Innenseite 13 des Außenrandes 30 des inneren Stütztellers 9 anliegen und dort mit der Verschraubung 43 befestigt sind.

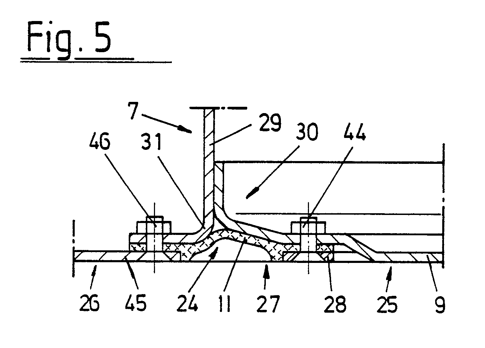

Bei einer anderen Ausführungsform, die in Fig.3 wiedergegeben ist, ist die Ringdichtung 11 selbst mit einer Fahne 16 versehen, mit der sie an der Innenseite 13 des Außenrandes 30 des inneren Stütztellers 9 anliegt und dort mit der Verschraubung 43 befestigt ist.

In Fig.4 ist eine Bauart der Ringdichtung 11 dargestellt, bei der diese ebenfalls mit einer Fahne 16 ausgestattet ist, die an der Außenseite 22 mit Vorsprüngen 20 versehen ist, die sich in Öffnungen 23 des Außenrandes 30 von innen her einlegen, während die Ringdichtung 11 im Bereich oberhalb der Begrenzung 19 des Außenrandes 30 und innerhalb desselben im Bereich der Fahne 16 von je einem Federring 17 in der dichtenden Lage gehalten ist.

Die Ringdichtung 11 ist in diesem Fall als Lippendichtung ausgebildet und ist mit zwei beabstandeten Dichtkanten 34 versehen, welche die Abstreifwirkung verbessern.

Eine andere Art der Abdichtung ist in Fig.5 wiedergegeben, bei der die Ringdichtung 11 als Plattendichtung ausgebildet ist und sowohl an dem inneren 9, als auch an dem äußeren Stützteller 7 befestigt ist.

Zu diesem Zweck weist die Unterseite 25 des inneren Stütztellers 9 am Außenrand 30 eine Einsickung 27 auf, in die die Ringdichtung 11 eingelegt ist und von einem Niederhaltering 28 eingeklemmt und mit einer Verschraubung 44 befestigt ist.

Der äußere Rand der Ringdichtung 11 ist zwischen einem senkrecht zur Axialrichtung 21 nach innen gebogenen Rand 31 der zylindrischen Einziehung 29 an der Unterseite 26 des äußeren Stütztellers 7 und einer Bodenplatte 45 eingeklemmt und mit einer Verschraubung 46 befestigt.

Selbstverständlich können beide Befestigungsarten an beiden Stütztellern Verwendung finden.


Bezugszeichenverzeichnis

1 Mähwerksrahmen
2 Führungsrohr
3 Antriebswelle
4 Mähtellernabe
5 Mähteller
6 äußere Stütztellernabe
7 äußerer Stützteller
8 innere Stütztellernabe
9 innerer Stützteller
10 Höhenverstellvorrichtung
11 elastische Ringdichtung
12 Gehäuse der Ringdichtung 11
13 Innenseite des Außenrandes 30 des inneren Stütztellers 9
14.14′ Teile des Gehäuses 12
15.15′ Fahnen der Teile 14.14′
16 Fahne der Ringdichtung 11
17 Federring
18 Dichtfläche
19 Begrenzung des Außenrandes 30
20 Vorsprung
21 axiale Richtung
22 Außenseite der Fahne 16 der Ringdichtung 11
23 Öffnung im Außenrand 30 für Vorsprung 20

24 unteres Ende des Außenrandes 30

25 Unterseite des inneren Stütztellers 9

26 Unterseite des äußeren Stütztellers 7

27 Einsickung des inneren Stütztellers 9

28 Niederhaltering des inneren Stütztellers 9

29 zylindrische Einziehung des äußeren Stütztellers 7

30 zylindrischer Außenrand des inneren Stütztellers 9

31 Rand der zylindrischen Einziehung 29

32 Keil auf der Antriebswelle 3

33 Verschraubung der Antriebswelle 3

34 Dichtkante der Ringdichtung 11

35 Verschraubung des Mähtellers 5

36 Trommel

37 Spalt zwischen den Stütztellern 7 und 9

38 Flansch der Mähtellernabe 4

39 Flansch der äußeren Stütztellernabe 6

40 Verschraubung des äußeren Stütztellers 7

41 Flansch der inneren Stütztellernabe 8

42 Verschraubung des inneren Stütztellers 9

43 Verschraubung des Gehäuses 12 der Ringdichtung 11

44 Verschraubung des Niederhalteringes 28

45 Bodenplatte

46 Verschraubung der Bodenplatte 45

**Ansprüche**

1. Rotationsmähwerk mit wenigstens zwei Mähkreiseln, die jeweils an einem obenliegenden Mähwerksrahmen mit einer Antriebswelle gelagert sind, mit der eine, einen Mähteller tragende Mähtellernabe aufgekeilt ist, auf der eine, einen äußeren Stützteller tragende äußere Stütztellernabe frei drehbar gelagert ist, auf der wiederum eine innere Stütztellernabe, die einen inneren Stützteller trägt, unverdrehbar und mit einer Höhenverstellvorrichtung axial verschiebbar gelagert ist, dadurch gekennzeichnet, daß der innere Stützteller (9) mit koaxialem, zylindrischem Außenrand (30) in der koaxialen, zylindrischen Einziehung (29) des äußeren Stütztellers (7) axial verschiebbar und dichtend geführt ist.

2. Rotationsmähwerk nach Anspruch 1, dadurch gekennzeichnet, daß zwischen dem Außenrand (30) und der Einziehung (29) eine elastische Ringdichtung (11) angebracht ist.

3. Rotationsmähwerk nach Anspruch 1 oder 2, dadurch gekennzeichnet, daß die Ringdichtung (11) mit der Dichtfläche (18) im wesentlichen in axialer Richtung (21) oberhalb der Begrenzung (19) des Außenrandes (30) des inneren Stütztellers (9) angeordnet ist.

4. Rotationsmähwerk nach Anspruch 2 oder 3, dadurch gekennzeichnet, daß die Ringdichtung (11) in einem dreiseitig umgebenden festen Gehäuse (12) eingelegt ist, das an der Innenseite (13) des Außenrandes (30) des inneren Stütztellers (9) vorzugsweise lösbar befestigt ist.

5. Rotationsmähwerk nach Anspruch 4, dadurch gekennzeichnet, daß das Gehäuse (12) zweiteilig ausgebildet ist und beide Teile (14,14') Fahnen (15,15') aufweisen, an denen sie befestigt sind.

6. Rotationsmähwerk nach einem der Ansprüche 1 bis 3, dadurch gekennzeichnet, daß die Ringdichtung (11) eine Fahne (16) aufweist, mit der sie an der Innenseite (13) des Außenrandes (30) des inneren Stütztellers (9) befestigt ist.

7. Rotationsmähwerk nach einem der Ansprüche 1 bis 3, dadurch gekennzeichnet, daß die Ringdichtung (11) von wenigstens einem Federring (17) gehalten ist, der an der Ringdichtung (11) von innen anliegt.

8. Rotationsmähwerk nach Anspruch 7, dadurch gekennzeichnet, daß wenigstens ein Federring (17) im Bereich der Ringdichtung (11) angeordnet ist, der oberhalb der Begrenzung (19) des Außenrandes (30) des inneren Stütztellers (9) liegt.

9. Rotationsmähwerk nach Anspruch 7 oder 8, dadurch gekennzeichnet, daß wenigstens ein Federring (17) im Bereich der Ringdichtung (11) angeordnet ist, der an der Innenseite (13) des Außenrandes (30) des inneren Stütztellers (9) liegt.

10. Rotationsmähwerk nach Anspruch 8, dadurch gekennzeichnet, daß die Ringdichtung (11) mit Vorsprüngen (20) versehen ist, die an der Außenseite (22) der Fahne (16) am Umfang verteilt sind und in Öffnungen (23) des Außenrandes (30) des inneren Stütztellers (9) von innen eingreifen.

11. Rotationsmähwerk nach einem der Ansprüche 1 bis 4, 6, 7 oder 10, dadurch gekennzeichnet, daß die Ringdichtung (11) als Lippendichtung mit wenigstens zwei beabstandeten Dichtkanten (34) versehen ist.

12. Rotationsmähwerk nach Anspruch 1 oder 2, dadurch gekennzeichnet, daß die Ringdichtung (11) aus einer Plattendichtung besteht, die am unteren Ende (24) des Außenrandes (30) des inneren Stütztellers (9) angeordnet ist und an der Unterseite (25) des inneren Stütztellers (9) und an der Unterseite (26) des äußeren Stütztellers (7), vorzugsweise lösbar, befestigt ist.

13. Rotationsmähwerk nach Anspruch 12, dadurch gekennzeichnet, daß die Ringdichtung (11) in eine ringförmige Einsickung (27) an der Unterseite (25 und/oder 26) des inneren Stütztellers (9) und/oder des äußeren Stütztellers (7), insbesonders unter Verwendung eines Niederhalteringes (28) verschraubt ist.

14. Rotationsmähwerk nach Anspruch 12, dadurch gekennzeichnet, daß die Ringdichtung (11) zwischen einem senkrecht zur Axialrichtung (21) nach innen gebogenen Rand (31) der zylindrischen Einziehung (29) an der Unterseite (26) des äußeren Stütztellers (7) und/oder einem Rand am unteren Ende des zylindrischen Außenrandes (30) des inneren Stütztellers (9) einerseits und einer Bodenplatte (45) des äußeren Stütztellers (7) und/oder des inneren Stütztellers (9) andererseits geklemmt und verschraubt ist.

15. Rotationsmähwerk nach Anspruch 1, dadurch gekennzeichnet, daß die zylindrische Einziehung (29) des äußeren Stütztellers (7) wenigstens der axialen Höhe des zylindrischen Außenrandes (30) des inneren Stütztellers (9) entspricht und vorzugsweise ein Mehrfaches der Höhe der maximalen Schnitthöhenverstellung in axialer Richtung (21) beträgt.

# Fig. 1

Fig. 2

Fig. 3

Fig. 4

# Fig. 5

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-272385 (KLOCKNER-HUMBOLDT-DEUTZ) * das ganze Dokument * | 1, 2, 6, 12-14 | A01D34/74 |
| A | DE-A-3316204 (FELLA-WERKE) * Seite 7, Absatz 2; Figur 5 * | 1, 15 | |
| A | DE-A-3622855 (KLOCKNER-HUMBOLDT-DEUTZ) * Figur 2 * | 1, 15 | |
| E | DE-U-8815674 (POTTINGER) * Ansprüche 1, 9 * | 1, 15 | |
| A | GB-A-2159684 (CLAAS) | | |
| A | NL-A-8002780 (VOGELENZANG) | | |
| A | NL-A-7805129 (LIET) | | |

RECHERCHIERTE SACHGEBIETE (Int. Cl.5)

A01D

Der vorliegende Recherchenbericht wurde für alle Patentansprüche erstellt

| Recherchenort | Abschlußdatum der Recherche | Prüfer |
|---|---|---|
| DEN HAAG | 12 MAERZ 1990 | DE LAMEILLIEURE D. |